# EUROPEAN PATENT APPLICATION

(11) **EP 3 798 332 A1**
(43) Date of publication of application: **31.03.2021**
(21) Application number: 19199548.9
(22) Date of filing: 25.09.2019
(51) Int. Cl.: C25B 1/04, C25B 11/04

(54) **METHOD OF BOOSTING HYDROGEN EVOLUTION ACTIVITY OF ELECTROCATALYSTS**

(71) Applicant: Max-Planck-Gesellschaft zur Förderung der Wissenschaften e.V., 80539 München (DE)
(72) Inventor: LI, Guowei, 01069 Dresden (DE); FELSER, Claudia, 06118 Halle (DE)
(74) Representative: Schweitzer, Klaus

(57) **Abstract**

The present invention refers to increasing the catalytic efficiency of HER electrocatalysts with a low external magnetic field. The electrocatalyst is a metal or a compound with partially filled d-orbitals, more preferred a ferromagnetic or paramagnetic material with partially filled *d*-orbitals.

## Description

### FIELD OF THE INVENTION

The present invention pertains to the technical field of electrochemical water splitting. More particularly, the present invention pertains to a method of increasing the electrochemical activity of catalysts for the **H**ydrogen **E**volution **R**eactions (HER).

### BACKGROUND

Hydrogen is a carbon-free fuel with high energy density that can replace traditional fossil fuels. The electrocatalytic conversion of renewable resources, such as water, to hydrogen, is a promising strategy to meet the increasing energy demand and environmental remediation. In the electrochemical water splitting process, a potential is applied on the electrochemical cell, and high-purity hydrogen can be produced and collected continually at the cathode side, and used directly e.g. for medical purposes or powering engines e.g. through a hydrogen fuel cell. The minimum potential needed to start the water-splitting reaction is 1.23 V under standard conditions (1 bar, 25 °C). However, in addition to the thermodynamic requirements, an additional potential is needed to drive a reaction at a certain rate. Thus, for large-scale production of H₂, inexpensive and high-efficient electrocatalysts are needed to minimize the water splitting potential.

Up to today, platinum (Pt) is still the best choices with high catalytic activity and stability. This may be related to the extremely large spin Hall effect in Pt. However, the extremely high price of Pt and its scarcity make it impossible to sustain a worldwide hydrogen economy. In the last few decades, many efforts have been made to search for earth-abundant and cost-effective catalysts for HER. Strategies towards this goal include nano-structuring to expose more active sites, creating defects, or phase-engineering.

US4476105A describes applying a magnetic field gradient to a heated semipermeable membrane in a photosynthetic water splitting system. The magnetic field can bias the transferred oxygen away from the heated membrane.

US8241471B2 discloses an electrolytic system for producing hydrogen gas. The electrolyte in the system includes a magnetic material such as nano-nickel or nano-iron, or a nano-nickel-iron-alloy. The electrodes include a first electrode of a non-magnetic material. A second electrode includes an electrode precursor of a magnetic material or an electromagnet. When in its magnetic state, the electrode precursor exerts a magnetic force of sufficient strength to pull the nano-metal of the electrolyte onto at least a portion of its surface, to form the second electrode.

L. Gao, C. Wang, R. Li, R. Li, and Q. Chen (Nanoscale. 2016, 8, 8355) report that an external magnetic field can increase the catalytic activity of Pd nanoparticles in Suzuki cross-coupling reactions.

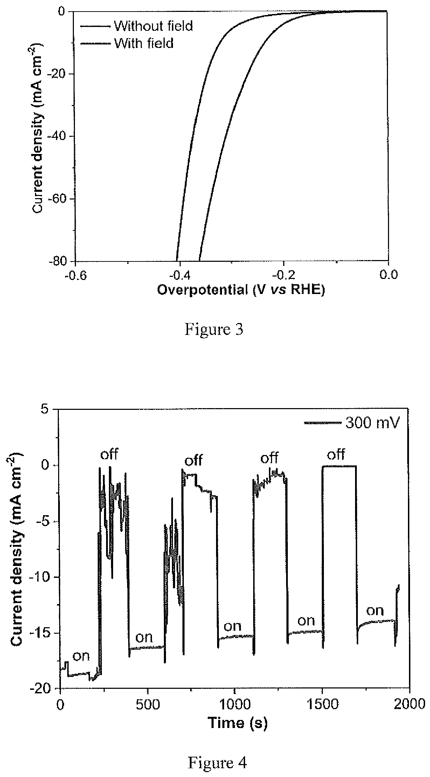

Marek Zieliński (JAdv Chem Eng 2014, 4:2) found that the reaction rate constant of hydrogen production can be accelerated by both increasing the temperature and under a Constant Magnetic Field of at least 200 mT (Zieliński: Fig. 4). But, this harmed the surface of the material (so-called hydrogen corrosion).

M. Lin, L. Hourng, and C. Kuo. (Int. J. Hydrog. Energy, 2012, 37:1311) describes the effect of the magnetic force on hydrogen production efficiency in water electrolysis. They found that the catalytic activities can be decreased or increased by controlling the magnetic field direction. The increase of current density is valid for ferromagnetic catalysts, but worse for paramagnetic and antiferromagnetic catalysts.

All of the above efforts and strategies are effective for the synthesis of high-efficient catalysts to some extent but they are too expensive for mass production. Thus, an ongoing need exists to increase the electrocatalytic efficiency.

It was, therefore an object of the present invention to enhance the electrocatalytic activity of catalysts for hydrogen evolution reaction.

### SUMMARY OF THE INVENTION

The present inventors found that by applying a relatively small constant external magnetic field, the catalytic efficiency of certain electrocatalysts can be increased significantly. "Applying an external magnetic field" means in the proximity of a permanent or electromagnet, such that the catalytic material experiences a constant magnetic field of the indicated magnitude. The electrochemical cell of the present invention comprises an anode, a cathodic working electrode, and an external magnetic field that surrounds the cell and the cathodic working electrode. The magnetic field needed for increasing the catalytic efficiency is ≤ 170 mT, preferably ≤ 100 mT and more preferred ≤ 50 mT. The Magnet can be a permanent magnet or an electromagnet. The electrocatalyst is a metal or a compound with partially filled d-orbitals, more preferred a ferromagnetic or paramagnetic material with partially filled d-orbitals.

### BRIEF DESCRIPTION OF THE DRAWINGS

The accompanying drawings are included to provide a further understanding of the present invention. The drawings illustrate exemplary embodiments of the present invention and, together with the description, serve to explain the principles of the present invention.
Figure 1 shows an exemplary experimental set-up for the production of hydrogen through electrochemical water splitting in the presence of a magnetic field.
Figure 2 shows the distance depended strength of magnetic field. The distance is measured between the indicated catalyst and the magnet.
Figure 3 shows a comparison of the linear polarization curves of Ni foam with and without the magnetic field.
Figure 4 shows the HER activity of Ni foam with and without the magnetic field at a fixed overpotential.
Figure 5 shows a comparison of the HER activity of Ni plates with and without a magnetic field at a fixed overpotential.
Figure 6 shows a comparison of the HER activity of a Co₂MnGa single crystal with and without a magnetic field at a fixed overpotential.
Figure 7 shows a comparison of the HER activity of Pt/C powder with and without a magnetic field at a fixed overpotential.
Figure 8 shows a summary of the increase in HER efficiency for various electrocatalysts in the presence of a magnetic field.

### DETAILED DESCRIPTION OF THE INVENTION

The present invention provides a simple method to increase the activity of HER catalyst with a magnetic field that is larger than the average magnetic field of the earth (which is about 65 × 10⁻⁶ mT). It was found that the catalytic activity of electrocatalysts can be increased by as much as 700 % with only a small magnetic field of ≤ 170 mT. This dramatic enhancement of HER catalytic efficiency under a small magnetic field occurs in metals or compounds with partially filled d-orbitals.

For the hydrogen evolution reaction in water (electrolysis), the cathode is covered with the electrocatalyst and connected with electrical power. A negative potential is applied to the cathode and electrons are transferred to the cathode across the electrical circuit, and then injected into the electrocatalysts. The electrons are then further injected into the adsorbates, typically H⁺ or H₂O to complete the reduction process. H₂ bubbles are then produced continually at a given potential. The physical properties of the electrocatalysts, like electrical conductivity and carrier mobility, are extremely important for the HER catalytic activity.

In the electrochemical hydrogen evolution, the reaction which takes place at the cathode side can be described as 2H⁺ + 2*e*⁻ → H₂. Theoretically, the minimum potential needed to start the reaction is 1.23 V under standard conditions (1 bar, 25 °C). However, in addition to the thermodynamics requirement, a larger potential (generally > 1.6 V) is needed to actually drive the reaction. Part of the extra potential is due to the resistance of the electrolyte, electrodes, and the external circuit. Yet, the most important contribution comes from the overpotential (η) associated with driving the kinetics of the HER at the cathode interface. An electrocatalyst increases the rate of reaction by lowering the activation energy. Thus, the reaction occurs at a smaller potential.

Without wishing to be bound by this theory it is assumed that the HER process is governed by the *d*-band theory. In the HER process, hydrogen is first adsorbed on the active sites of the catalyst by the formation of a bond. The bonding is a result of the coupling between the H Is-orbital and the metal d-orbitals. The HER efficiency is then to some extent decided by the strength of this coupling (bond). In addition, the HER process requires the transfer of one electron to the adsorbed hydrogen ions to complete the reduction reaction. This electron originates from the metal d-orbitals.

Electrons have two basic properties, spin and charge. Both of them need to be transferred in the HER process. For metals or compounds with partially filled d-orbitals, these electrons carry local magnetic moments and can "feel" an external magnetic field. Accordingly, the transfer of such electrons from d-orbitals will be influenced by a magnetic field which in turn will, therefore, have an impact on the HER efficiency.

Accordingly, the present method of increasing the electrochemical activity of catalysts for the Hydrogen Evolution Reactions (HER) is applicable to metals and compounds with partially filled d-orbitals, preferably ferromagnetic metals, ferromagnetic intermetallic compounds, ferromagnetic transition metal oxides, ferromagnetic transition metal sulfides, and ferromagnetic Heusler alloys. Yet, the method is also applicable to paramagnetic metals, paramagnetic intermetallic compounds, paramagnetic transition metal phosphides in an electrochemical cell having an anode, a cathodic working electrode, and an external magnetic field that circumscribing the cell and the cathodic working electrode.

In a preferred embodiment the ferromagnetic metals are selected from the group consisting of Fe, Ni, and Co. These metals have unpaired electrons in the d-orbitals and exhibit ferromagnetism due to the existence of long-range magnetic order.

In another preferred embodiment the ferromagnetic intermetallic compounds are selected from the group consisting of materials comprising two or more elemental metals of defined proportions (*x* and *y*) and still showing room temperature ferromagnetism. Preferred binary phase intermetallic compounds are those of the formula A*ₓ*B*_{y}*, wherein A = Fe, Co, or Ni, and B is selected from the group consisting of transition metals and *x* and *y* independently from one another represent an integer from 1 to 8. Typical binary phase intermetallic compounds which can be used in the present invention are Fe₃Cr, Fe₃Ga₄, Fe₃Pt, FeRh, CoGa, CoPt, Co₃Ti, Ni₃Fe, Ni₃Mn, NiPt, etc.

In another preferred embodiment the ferromagnetic metal oxides are selected from the group consisting of compounds comprising oxygen and one or more metallic elements. The binary metal oxides have the formula of TₓO_{y}, wherein T is selected from the group consisting of transition metals. The ternary metal oxides have the formula TₓT'₁₋ₓO_{y}, wherein T and T' are independently selected from the group consisting of transition metals which exhibit ferromagnetism at the working temperature of the HER-cell. *x* and *y* independently from one another represent an integer from 1 to 8 in the above formulae. Typical ferromagnetic metal oxide compounds which can be used in the present invention are Fe₃O₄, Fe₂O₃, NiO, CO₃O₄, ZnFe₂O₄, NiFeZnO₄, MnFe₂O₄, CoFe₂O₄, NiFe₂O₄, etc.

In another preferred embodiment the ferromagnetic metal sulfides are selected from the group consisting of compounds comprising sulfur and one or more metallic elements. Binary metal sulfides have the formula TₓS_{y}, wherein T is selected from the group consisting of transition metals; ternary metal sulfides have the formula TₓT'₁₋ₓS_{y}, wherein T and T' are selected from the group consisting of transition metals which exhibit ferromagnetism at the working temperature of the HER-cell. *x* and *y* independently from one another represent an integer from 1 to 8 in the above formulae. Typical ferromagnetic metal sulfide compounds which can be used in the present invention are Fe₃S₄, Fe₇S₈, Ni₃S₄, Co₃S₄, NiFe₂S₄, ZnFe₂S₄, NiFeZnS₄, etc.

In another preferred embodiment the ferromagnetic Heusler alloys have a composition of TT'Z (half-Heusler) or T₂T'R (full-Heusler), wherein T and T' are selected from the group consisting of transition metals and R is in element from IUPAC group 13, 14 or 15. Typical ferromagnetic Heusler alloys which can be used in the present invention are Mn₂NiSb, Ni₂MnGa, Co₂MnGa, Cu₂MnSb, NiCrSi, NiCrGe, NiCrGa, etc. They exhibit ferromagnetism above 300 K.

In another preferred embodiment the paramagnetic metal is selected from the group consisting of Pt, Pd, Ru, Ir, Rh, Ag, Mo, Y, and W.

In another preferred embodiment the paramagnetic intermetallic compound is selected from the group consisting of materials comprising two or more elemental metals which still exhibit room temperature paramagnetism. Typical paramagnetic intermetallic compounds which can be used in the present invention are PtRu, PtIr, etc.

In another preferred embodiment the paramagnetic transition metal phosphides are selected from the group consisting of compounds comprising phosphorus and one or more metallic elements. Typical paramagnetic transition metal phosphides which can be used in the present invention are NbP, MoP, WP, WP₂, etc.

It was very surprising that the increase in electrochemical activity occurred already at a magnetic field strength as low as ≤ 170 mT. It can be assumed that the increase of HER activity by a magnetic field is a result of the Magneto Hydrodynamic Effects (MHD). This would imply that the bigger the applied magnetic field, the faster of desorption of hydrogen bubbles and also the transport of hydrogen ions to the surface of the catalyst. Accordingly, it was assumed that an increase in magnetic field strength inevitably goes along with an increase in HER activity. Surprisingly, the catalysts defined and selected in the present invention work even better at lower magnetic field strength, e.g. at 170 mT, which is against all previous understanding. Without wishing to be bound by this theory it is believed that this is caused by modifying the spin structure of the catalysts, rather than the hydrogen bubbles and solution. Catalysts with unfilled *d*-orbitals have umpired electrons, the spin orientation of which can easily be controlled by a small magnetic fields, even as lower as 200 mT and lower.

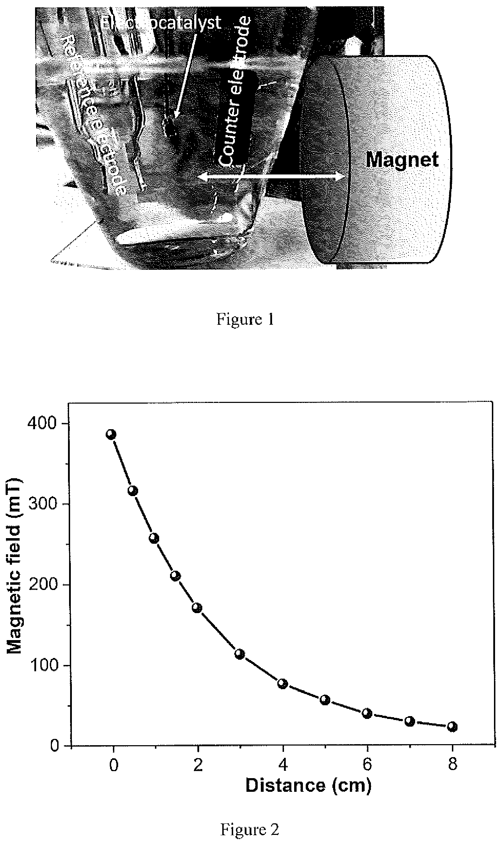

The magnetic field strength in the present invention can be varied e.g. by varying the distance of the catalyst from a permanent magnet as shown in figure 2 or by using an electromagnet with variable magnetic field strength. The magnetic field strength at a given distance can be measured with a magnetometer.

### EXAMPLES

The invention is explained in more detail below with reference to examples.

### HER Experimental Setup

The experiment setup is shown in Figure 1. The assessment of HER catalytic activities is performed on an Autolab PGSTAT302N potentiostat. A conventional three-electrode cell configuration was employed. A Ag/AgCl (3 M KCl) electrode was used as the reference electrode, and a graphite rod was used as a counter electrode. The electrolyte was 1 M KOH solution purified with Ar. The corresponding linear sweep voltammograms of various electrocatalysts were recorded with a scan rate of 1 mV/s. All potentials were referenced to a **R**everse **H**ydrogen **E**lectrode (RHE). For the HER activity assessment with an external magnetic field, a permanent NdFeB magnet (supermagnet, S-70-35-N) is used.

### Preparation of electrocatalysts

High-quality single bulk crystals of NbP are grown via a chemical vapor transport reaction using an iodine transport agent. A polycrystalline powder of NbP is synthesized by direct reaction of niobium and red phosphorus within an evacuated fused silica tube for 48 h at 800 °C. The growth of bulk single crystals of NbP is then initialized from this powder by chemical vapor transport in a temperature gradient, starting from 850 °C (source) to 950 °C (sink) and a transport agent with a concentration of 13.5 mg cm⁻³ iodine (Alfa Aesar 99.998%).

Single crystals of Co₂MnGa were grown using the Bridgman Stockbarger crystal growth technique. The polycrystalline sample was synthesized first by induction melting from high-quality stoichiometric amounts of elemental cobalt (99.999%), manganese (99.999%) and gallium (99.999%) in an alumina crucible, The induction-melted sample is then crushed into powder form and packed in a custom-designed sharp-edged alumina tube, which was sealed in a tantalum tube. The sample was heated to 1523 K and sintered for 10 h to ensure the homogeneity of the melt, and then slowly cooled to 1023 K.

For the preparation of Pt/C and Ni nano-powders for HER measurement, 8 mg of Pt/C or Ni powder were dispersed in 1 mL of solvent (Nafion solution (5 wt. %)/water/ethanol mixture, v/v = 0.1 : 2.4 : 2.5). After ultrasonication, an aliquot of a 3 µL dispersion was pipetted onto a carbon paper (purchased from ZOLTEK™ Co. Ltd). After drying at 60°C for 10 min, the carbon cloth with electrocatalysts can serve as the working electrode directly.

For the catalytic activity assessment of single crystals, e.g. NbP, or Co₂MnGa, these were attached to a Cu wire with silver paint. After drying at 80°C for 2 h, they can be used as working electrode directly.

### Experimental details

In the measurement process, all the catalysts are cycled to reach a stable state. The current is measured at a given potential first and measured again at the same conditions in the presence of a magnet. All measurements were performed at room temperature (about 23 °C).
Figure 1 shows an exemplary experimental set-up for the production of hydrogen through electrochemical water splitting in the presence of a magnetic field. The experimental set-up includes an Ag/AgCl (3 M KCl) reference electrode, a graphite counter electrode, and the electrocatalysts as the working electrode. The applied magnetic field can be controlled by the distance between the hard magnet and the working electrode.
Figure 2 shows the distance depended strength of magnetic field. The distance is measured between the indicated catalyst and the magnet. The magnetic field is measured by magnetometer.
Figure 3 shows a comparison of the linear polarization curves of Ni foam with and without the magnetic field. It can be seen that a smaller potential is needed to deliver the same current density in the presence of a magnetic field.
Figure 4 shows the HER activity of Ni foam with and without a magnetic field at a fixed overpotential. It can be seen that the current densities changed accordingly with and without a magnetic field. The current density is increased by 700 % with a magnetic field of 170 mT.

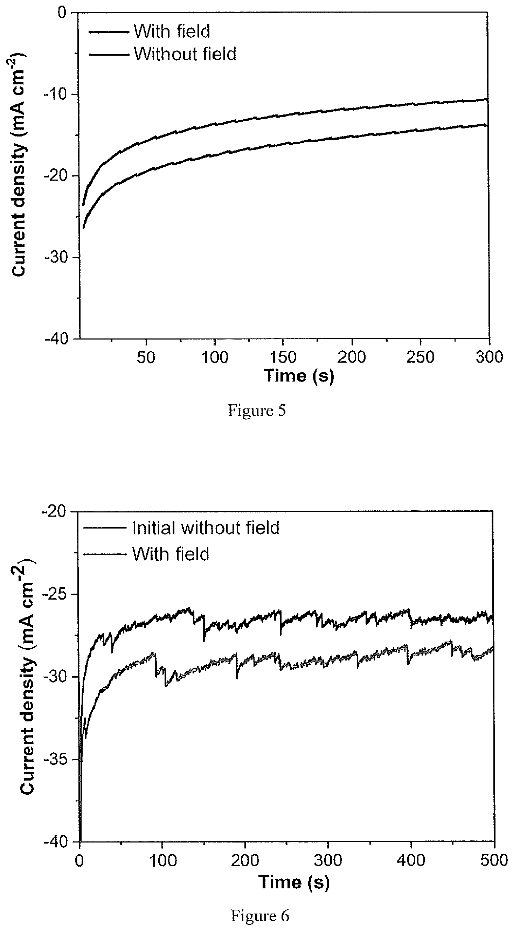

Figure 5 shows a comparison of the HER activity of Ni plates with and without a magnetic field at a fixed potential of -0.24 V vs RHE. The catalytic efficiency is increased by 25 % with a magnetic field of 113 mT.
Figure 6 shows a comparison of the HER activity of Co₂MnGa with and without a magnetic field at a fixed potential of -0.33 V *vs* RHE. The HER catalytic efficiency is increased by 10 % with a magnetic field of 39 mT.

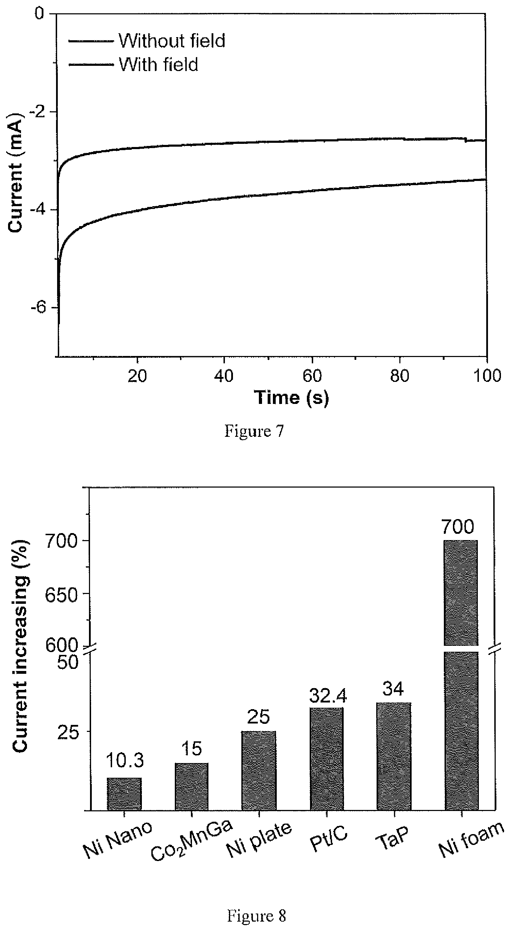

Figure 7 shows a comparison of the HER activity of Pt/C powder with and without a magnetic field at a fixed overpotential. The catalytic efficiency is increased by 32.4 % with a magnetic field of 56 mT.
Figure 8 shows a summary of the increase in HER efficiency for various electrocatalysts in the presence of a magnetic field.

## Claims

1. A process for enhancing the catalytic effect of a catalyst for the electrochemical hydrogen evolution reaction, comprising exposing the catalyst to an external magnetic fied of between 65 × 10⁻⁶ mT and ≤ 170 mT during the hydrogen evolution reaction.

2. The process of claim 1, wherein the catalyst is a metal or compound with partially filled *d*-orbitals.

3. The process of claim 1 or 2, wherein the catalyst is a ferromagnetic or paramagnetic material.

4. The process of one of claims 1-3, wherein the catalyst is a ferromagnetic metal, ferromagnetic intermetallic compound, ferromagnetic transition metal oxide, ferromagnetic transition metal sulfide, ferromagnetic Heusler alloy, paramagnetic metal, paramagnetic intermetallic compound or paramagnetic transition metal phosphide.

5. The process of one of claim 4, wherein the ferromagnetic metal is selected from the group consisting of Fe, Co and Ni.

6. The process of one of claim 4, wherein the ferromagnetic intermetallic compound is selected from the group consisting of materials comprising two or more elemental metals of defined proportions which still show room temperature ferromagnetism, preferably a binary phase intermetallic compound of the formula A*ₓ*T*_{y}*, wherein A = Fe, Co, or Ni, and T is selected from the group consisting of transition metals and *x* and *y* independently from one another represent an integer from 1 to 8, more preferably a binary phase intermetallic compound selected from one or more of Fe₃Cr, Fe₃Ga₄, Fe₃Pt, FeRh, CoGa, CoPt, Co₃Ti, Ni₃Fe, Ni₃Mn and NiPt.

7. The process of one of claim 4, wherein the ferromagnetic metal oxide is selected from the group consisting of compounds comprising oxygen and one or more metallic elements, preferably the binary metal oxides have the formula TₓO_{y}, wherein T is selected from the group consisting of transition metals, and wherein preferably the ternary metal oxides have the formula TₓT'₁₋ₓO_{y}, wherein T and T' are independently selected from the group consisting of transition metals which exhibit ferromagnetism at the working temperature of the HER-cell and wherein *x* and *y* independently from one another represent an integer from 1 to 8, more preferably the ferromagnetic metal oxide compound is selected from one or more of FC₃O₄, Fe₂O₃, NiO, Co₃O₄, ZnFe₂O₄, NiFeZnO₄, MnFe₂O₄, CoFe₂O₄ and NiFe₂O₄.

8. The process of one of claim 4, wherein the ferromagnetic metal sulfide is selected from the group consisting of compounds comprising sulfur and one or more metallic elements, preferably
- binary metal oxides having the formula TₓS_{y}, wherein T is selected from the group consisting of transition metals; and/or
- ternary metal oxides have the formula TₓF'₁₋ₓS_{y}, wherein T and T' are selected from the group consisting of transition metals which exhibit ferromagnetism at the working temperature of the HER-cell
- wherein *x* and *y* independently from one another represent an integer from 1 to 8,
more preferably the ferromagnetic metal sulfide is selected from one or more of Fe₃S₄, Fe₇S₈, Ni₃S₄, Co₃S₄, NiFe₂S₄, ZnFe₂S₄ and NiFeZnS_{4.}

9. The process of one of claim 4, wherein the ferromagnetic Heusler alloy has a composition of TT'Z (half-Heusler) or T₂T'R (full-Heusler), wherein T and T' are selected from the group consisting of transition metals and R is an element from IUPAC group 13, 14 or 15, more preferably the ferromagnetic Heusler alloy is selected from one or more of Mn₂NiSb, Ni₂MnGa, Co₂MnGa, Cu₂MnSb, NiCrSi, NiCrGe and NiCrGa.

10. The process of one of claim 4, wherein the paramagnetic metal is selected from the group consisting of Pt, Pd, Ru, Ir, Rh, Ag, Mo, Y, and W.

11. The process of one of claim 4, wherein the paramagnetic intermetallic compound is selected from the group consisting of materials comprising two or more elemental metals which still exhibit room temperature paramagnetism, preferably PtRu and/or PtIr.

12. The process of one of claim 4, wherein the paramagnetic transition metal phosphide is selected from the group consisting of compounds comprising phosphorus and one or more metallic elements, preferably NbP, MoP, WP and/orWP₂.

13. Use of an external magnetic field of ≤ 170 mT for increasing the efficiency of a HER.
